# EUROPÄISCHE PATENTSCHRIFT

(11) **EP 1 526 622 B1**
(45) Veröffentlichungstag und Bekanntmachung des Hinweises auf die Patenterteilung: **11.04.2012**
(21) Anmeldenummer: 04022089.9
(22) Anmeldetag: 16.09.2004
(51) Int. Cl.: H02H 7/12, H02M 1/00

(54) **Elektronisches Vorschaltgerät mit Schutzschaltung für Schalttransistoren eines Wandlers**
Electronic ballast with protection circuit for switching transitors of a converter
Ballast électronique avec circuit de protection pour transistors de commutation d'un convertisseur

(30) Priorität: 22.10.2003 DE 10349036
(43) Veröffentlichungstag der Anmeldung: 27.04.2005
(73) Patentinhaber: OSRAM AG, 81543 München (DE)
(72) Erfinder: Storm, Arwed, 85221 Dachau (DE)

(56) Entgegenhaltungen:
- EP-A- 0 010 811
- EP-A- 0 371 928
- WO-A-03/055281
- GB-A- 2 060 299
- US-A1- 2003 179 597

## Beschreibung

### Technisches Gebiet

Die vorliegende Erfindung bezieht sich auf elektronische Vorschaltgeräte zum Betreiben von Lampen oder anderen Licht emittierenden Produkten.

### Stand der Technik

In elektronischen Vorschaltgeräten werden Wandler verschiedener Bauart eingesetzt, die regelmäßig zumindest einen Schalttransistor enthalten.

In der Schrift EP 0010811 ist eine Überspannungs-Schutzschaltung offenbart, bei der zwei in Serie geschaltete Transistoren bei Überspannung abgeschaltet werden.

In der Schrift GB 2 060 299 ist eine Schutzschaltung gegen Überströme in Halbbrückenzweigen offenbart, die beim Abfall der Versorgungsspannung einen Überstrom indiziert und die Ansteuerung aller Harbbrückentransistoren wegnimmt.

### Darstellung der Erfindung

Der Erfindung liegt das technische Problem zugrunde, ein verbessertes elektronisches Vorschaltgerät mit einem einen Schalttransistor aufweisenden Wandler anzugeben.

Die Erfindung richtet sich auf ein elektronisches Vorschaltgerät mit einem von einer Leistungsversorgung gespeisten Wandler mit einem Schalttransistor und einer Schaltung zum Erfassen der Zeitableitung der Spannung der Leistungsversorgung, welche Schaltung dazu ausgelegt ist, den Schalttransistor des Wandlers ansprechend auf die erfasste Zeitableitung durch einen Schaltvorgang vor Überlastung zu schützen.

Bevorzugte Ausgestaltungen der Erfindung sind in den abhängigen Ansprüchen angegeben und werden im Folgenden erläutert. Die Erfindung hat auch einen Verfahrensaspekt, wobei die folgende Beschreibung sowohl im Hinblick auf den Vorrichtungscharakter als auch den Verfahrenscharakter zu verstehen ist.

Der Erfinder hat festgestellt, dass es bei den erfindungsgegenständlichen Vorschaltgeräten zu Schäden führen kann, wenn bestimmte Spannungsspitzen aus einer Netzversorgung eingekoppelt werden. So können die Schalttransistoren der Wandler bei hochenergetischen transienten Störungen (etwa gemäß EN 61547) zerstört werden, insbesondere auch durch Überströme, wenn sie in dieser Phase aufgesteuert werden. Die Erfindung hat daher eine Schaltung zum Schutz des Schalttransistors zum Gegenstand. Dabei wird durch die Schutzschaltung die Versorgungsspannung überwacht und ggf. ein Abschalten des zu schützenden Schalttransistors herbeigeführt.

Die erfindungsgegenständliche Erfassungsschaltung enthält einen Ausgangstransistor zum Erzeugen eines Ausgangssignals, das zum Abschalten des Schalttransistors führt. Insbesondere kann die Schaltstrecke des Ausgangstransistors die Steuerelektrode des Schalttransistors ansteuern, wie sich aus dem Ausführungsbeispiel ergibt. Dabei wird der Ausgangstransistor beispielsweise an ein Und-Gatter in einer Ansteuerschaltung für die Steuerelektrode des Schalttransistors gelegt und führt damit zu einem Inaktivieren (Disable) der Schalttransistor-Ansteuerung. Im Prinzip ist aber auch denkbar, den Ausgangstransistor mit seiner Schaltstrecke zwischen einer Ansteuerschaltung und der Steuerelektrode des Schalttransistors zu legen und diese Verbindung zu öffnen.

Dabei hat der Erfinder weiterhin festgestellt, dass ein an sich näher liegendes Erfassen der Versorgungsspannung selbst, also der Amplitude, zum einen häufig eine relativ genaue Einstellung von Schwellenwerten erfordert, um einerseits noch zulässige und gängige Amplituden zu akzeptieren und andererseits bei nicht mehr zulässigen Amplituden ausreichend früh zu reagieren. Kritische transiente Störungen können günstiger über die Zeitableitung der Versorgungsspannung erfasst werden. In den eben erwähnten Fällen ist dabei die Einstellung des Ansprechverhaltens der Erfassungsschaltung unkritischer, weil diese transienten Störungen regelmäßig steile Anstiegsflanken zeigen. Darüber hinaus erlaubt die Erfassung der Zeitableitung auch ein zeitlich früheres Abschalten schon in der ansteigenden Flanke und nicht erst beim Erreichen kritischer Spannungswerte.

Von besonderem Nutzen ist die Erfindung bei sog. Leistungsfaktorkorrekturschaltungen (PFC-Schaltungen, Power Factor Correction Circuits), die bei modernen elektronischen Vorschaltgeräten häufig den die Lampe versorgenden Wandlern vorgeschaltet sind und die an sich dem Fachmann bekannt und daher hier nicht im Einzelnen zu erläutern sind. Solche Leistungsfaktorkorrekturschaltungen enthalten regelmäßig Wandler, die neben einem Schalttransistor auch eine Speicherdrossel aufweisen. In diesen Fällen ist der Schalttransistor durch Sättigungsströme der Speicherdrossel in Folge von transienten Störungen gefährdet.

Besonders bevorzugt ist dabei die Anwendung bei sog. Abwärtswandlern (step-down-Konverter), die kleinere Spannungen als die Versorgungsspannungsamplitude erzeugen. Ein besonders bevorzugtes Beispiel, das sowohl als Aufwärtswandler als auch als Abwärtswandler arbeiten kann und damit im Sinn dieser Erfindung als Abwärtswandler betrachtet wird, ist ein SEPIC-Wandler. Auch das Prinzip des SEPIC-Wandlers soll hier nicht im Einzelnen erläutert werden. Stattdessen wird verwiesen auf die Literatur und beispielhaft auf die deutsche Patentanmeldung 101 10 239.9.

Weiterhin wird in der Erfassungsschaltung ein Gleichspannungs-Trennkondensator zur Erfassung der Zeitableitung verwendet, durch den die Erfassungsschaltung gleichstrommäßig, d. h. galvanisch, von der Versorgungsspannung getrennt ist. Damit können die Spannungen und Potentiale in der Erfassungsschaltung versorgungsspannungsunabhängig ausgelegt werden.

Ein weiteres Merkmal der Erfassungsschaltung ist eine kapazitive Teilerschaltung, an deren Mittenabgriff das für die Zeitableitung stehende Signal abgenommen wird. Vorzugsweise ist der erwähnte Gleichspannungs-Trennkondensator ein Teil dieser kapazitiven Teilerschaltung.

Ferner verfügt die Erfassungsschaltung über eine ohmsche Spannungsteilerschaltung, um den Arbeitspunkt für das Auslösen des Abschaltvorgangs einstellen zu können. Insbesondere kann die Steuerelektrode des erwähnten Ausgangstransistors an den Mittenabgriff der ohmschen Spannungsteilerschaltung angeschlossen sein.

Weiterhin ist ein Zeitglied vorgesehen, um durch eine einzelne Erfassung einer Spannungs-Zeitableitung einen Ausschaltvorgang ansteuern zu können. Im Prinzip wäre es auch möglich, die Versorgungsspannung bzw. deren Zeitableitung auch insoweit zu überwachen, dass das Ende der transienten Störung erfasst wird. Günstiger ist es jedoch, über ein Zeitglied eine für die zu erwartenden transienten Störungen ausreichende Zeitdauer vorzugeben. Insbesondere ist das Zeitglied als RC-Glied kombiniert mit der kapazitiven Teilerschaltung und/oder der ohmschen Spannungsteilerschaltung und einen Kondensator bzw. einen ohmschen Widerstand daraus. Um zu verhindern, dass sich das RC-Zeitglied in unerwünschter

Weise entlädt, kann eine Gleichrichterdiode vorgesehen sein. Auch hier wird zur Veranschaulichung auf das Ausführungsbeispiel verwiesen.

Ferner weist die Erfassungsschaltung auch eine Zenerdiode auf, mit der sich eine Ansprechschwelle hinsichtlich der erfassten Zeitableitung vorgeben lässt. Dies hat den Vorteil, nicht in Folge des Zeitglieds gewissermaßen integral mehrere aufeinander folgende kleinere Störungen mit jeweils für sich nicht ausreichenden Zeitableitungen kumulativ zu messen. Vielmehr würde die Zenerdiode hierbei zu kleine Zeitableitungswerte sperren und ein Ansprechen mit der durch das Zeitglied festgelegten Zeitdauer nur in dem Fall gestatten, dass die Spannungsschwelle der Zenerdiode überschritten wird.

Weitere Einzelheiten ergeben sich aus der folgenden Beschreibung eines Ausführungsbeispiels, dessen Merkmale auch in anderen Kombinationen erfindungswesentlich sein können.

### Kurze Beschreibung der Zeichnung(en)

- Fig. 1: zeigt ein Prinzipschaltbild der erfindungsgegenständlichen Erfas- sungsschaltung.
- Fig. 2: zeigt ein Prinzipschaltbild eines erfindungsgemäßen Vorschaltge- räts.

### Bevorzugte Ausführung der Erfindung

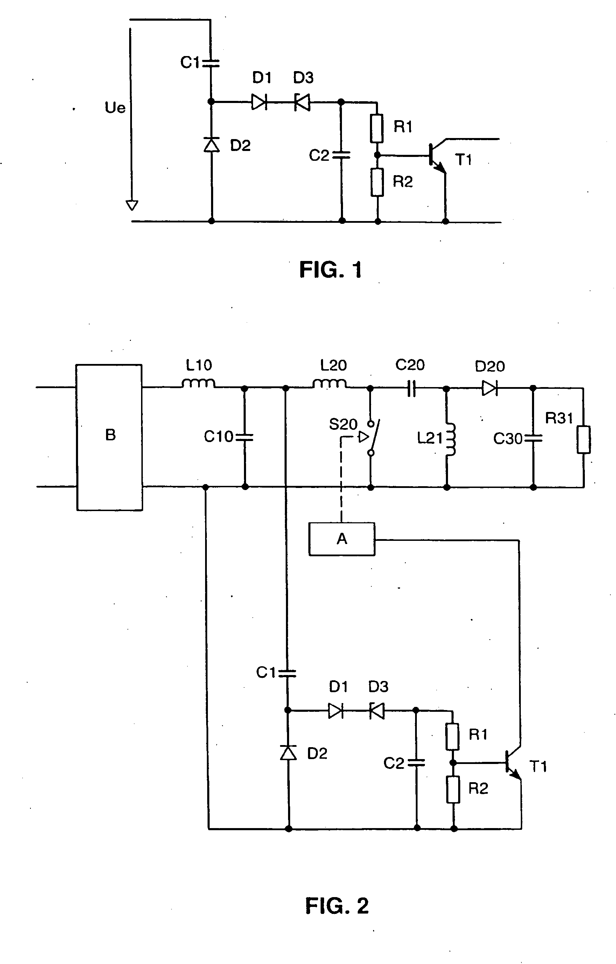

In Fig. 1 wird die Eingangsspannung Ue eines in Fig. 1 nicht dargestellten SEPIC-Wandlers angelegt an eine aus zwei Kondensatoren C1 und C2 aufgebaute kapazitive Teilerschaltung. An den Mittenabgriff der Teilerschaltung aus den Kondensatoren C1 und C2 ist der obere Anschluss einer ohmschen Spannungsteilerschaltung aus zwei ohmschen Widerständen R1 und R2 angeschlossen, wobei beide Teilerschaltungen mit ihren unteren Anschlüssen auf einem gemeinsamen Bezugspotential (interne Masse) liegen. Der Mittenabgriff der ohmschen Spannungsteilerschaltung aus den Widerständen R1 und R2 steuert die Basis eines bipolaren Ausgangstransistors T1 an, der in Emitterschaltung mit seinem Kollektoranschluss mittelbar die Basis oder das Gate eines nicht eingezeichneten Schalttransistors des SEPIC-Wandlers ansteuert, wie sich weiter unten aus Fig. 2 ergibt.

Einlaufende transiente Spannungsspitzen werden durch den Kondensator C1 wechselspannungsmäßig eingekoppelt, wobei eine zwischen den Mittenabgriff der kapazitiven Teilerschaltung aus den Kondensatoren C1 und C2 und das interne Bezugspotential geschaltete Gleichrichterdiode D2 eine nachträgliche Entladung des Kondensators C1 ermöglicht.

In diesem Zusammenhang ist darauf hinzuweisen, dass die dargestellte Erfassungsschaltung die Eingangsspannung Ue nach einer dem SEPIC-Wandler vorgeschalteten Gleichrichtung erfasst, so dass nur auf eine Polarität der transienten Störungen Rücksicht genommen werden muss.

Die wechselspannungsmäßig eingekoppelten transienten Störungen werden über eine Zenerdiode D3 an die ohmsche Spannungsteilerschaltung gegeben, gelangen also nur dann über die Zenerdiode D3 hinaus, wenn sie die dadurch festgelegte Spannungsschwelle übersteigen.

Die ohmsche Spannungsteilerschaltung aus den Widerständen R1 und R2 stellt dann einen geeigneten Arbeitspunkt ein, indem sie die zu erwartenden Spannungssignale auf geeignete Werte zur Ansteuerung der Basis des Ausgangstransistors T1 herunterteilt.

Der bereits im Rahmen der kapazitiven Teilerschaltung erwähnte Kondensator C2 bildet weiterhin gemeinsam mit den ohmschen Widerständen, im Wesentlichen mit dem Widerstand R1, ein Zeitglied. Wenn also der Kondensator C2 durch durch die Zenerdiode D3 durchlaufende Spannungspulse aufgeladen ist, so entlädt er sich über R1 und den Ausgangstransistor T1 mit einer bestimmten Zeitkonstante. Diese Zeitkonstante definiert im Wesentlichen eine Mindestzeit, in der der Ausgangstransistor T1 angesteuert wird.

Die Gleichrichterdiode D1 zwischen den Kondensatoren C1 und C2 verhindert dabei, dass sich der Kondensator C2 in unerwünschter Weise entlädt.

Fig. 2 zeigt die Erfassungsschaltung aus Fig. 1 in einem erfindungsgemäßen elektronischen Vorschaltgerät. In diesem Vorschaltgerät wird über einen Brückengleichrichter B eine Versorgungswechselspannung, im allgemeinen eine gewöhnliche Haushaltsnetzspannung, gleichgerichtet. Damit liegt in der Fig. 2 auf dem oben horizontal verlaufenden Leitungsast ein gleichgerichtetes positives Potential und auf dem dazu parallelen unteren ein gleichgerichtetes negatives Potential das i. d. R. das Bezugspotential darstellt. Die gleichgerichtete Wechselspannung bildet den Eingang eines SEPIC-Wandlers, der die Drosseln L20 und L21, den Kondensator C20, die Gleichrichterdiode D20 und den Schalttransistor S20 aufweist und von einer Ansteuerschaltung A angesteuert wird. Zwischen den Brückengleichrichter und den SEPIC-Wandler sind eine weitere Drossel L10 und ein weiterer Kondensator C10 zwischengeschaltet, die Filterzwecke haben. Diese Bauteile führen zu Überschwingern in Strom und Spannung und vergrößern die Vorteile der Erfindung.

An den rechts eingezeichneten Ausgang des SEPIC-Wandlers, also parallel zu einem Speicherkondensator C30, ist eine Last R31 geschaltet, die mit einer von dem Kondensator C30 zur Verfügung gestellten Gleichspannung versorgt wird. Bei der Last R31 handelt es sich um einen üblichen Halbbrückenoszillator mit zwei Schalttransistoren zur Erzeugung einer hochfrequenten Wechselspannung mit der eine Niederdruckgasentladungslampe betrieben werden kann. Da solche Schaltungen Stand der Technik und allgemein bekannt sind, ist die Last hier lediglich durch einen Widerstand dargestellt.

Der Kondensator C30 dient als Speicherkondensator und muss von dem SEPIC-Wandler aus der gleichgerichteten Wechselspannung auf eine möglichst konstante Gleichspannung aufgeladen werden. Dabei soll die Stromaufnahme aus dem Netz möglichst störungsfrei dem sinusförmigen Verlauf der Netzspannung nachgeführt werden.

Durch einen alternierenden Schaltbetrieb des Schalttransistors S20 wird die Spule L20 im Einschaltzustand aus der gleichgerichteten Netzspannung auf einen bestimmten Strom aufgeladen und im Ausschaltzustand des Schalttransistors S20 in den Kondensator C20 entladen. Gleichermaßen wird die Spule L21 in den Einschaltzeiten des Schalttransistors S20 aufgeladen und in den Ausschaltzeiten in den Speicherkondensator C20 entladen. Dabei ist die Polung der Diode D20 zu beachten. Es ergibt sich ein sog. lückender Betrieb, wenn die Ausschaltzeiten des Schalttransistors S20 ausreichend lang sind, damit der Strom in der Gleichrichterdiode D20 auf Null sinkt. Dabei bleibt im Mittel der Kondensator C20 im Wesentlichen auf dem Wert der momentan gleichgerichteten Versorgungsspannung aufgeladen. Daraus ergibt sich wiederum, dass der Speicherkondensator C30 in den Ausschaltzeiten lediglich mit der durch die Spule L21 erzeugten Induktionsspannung aufgeladen wird. Durch ein entsprechendes Tastverhältnis, also Verhältnis zwischen den Einschaltzeiten und Ausschaltzeiten, und unter Berücksichtigung der Last R31 lässt sich damit im Wesentlichen eine beliebige Gleichspannung an dem Kondensator C30 einstellen, die insbesondere kleiner als die Amplitude der Netzspannung sein kann. Dann arbeitet der SEPIC-Wandler als Abwärtswandler. Der Kondensator C20 sorgt gewissermaßen für eine Entkopplung zwischen den beiden Drosseln L20 und L21, so dass sich, im Gegensatz zu reinen Aufwärtswandlern wie dem Hochsetzsteller, die durch die Spule L20 erzeugten Spannungen nicht zu der momentanen Netzspannung addieren.

Der lückende Schaltbetrieb des Schalttransistors S20 wird durch die in Form eines Mikrocontrolers gegebene Ansteuerschaltung A gewährleistet, die wiederum über den bereits erwähnten Ausgangstransistor T1 inaktiviert werden kann. Der Ausgangstransistor T1 sorgt im Grunde für eine Diskretisierung zwischen zwei Zuständen ansprechend auf den Spannungsabgriff an der ohmschen Spannungsteilerschaltung aus den Widerständen R1 und R2. Das Ausgangssignal des Ausgangstransistors T1 wird dazu in ein und-Gatter in der Ansteuerschaltung A gespeist, was zu der beschriebenen Inaktivierung der Ansteuerung des Schalttransistors S20 führen kann.

Die in Fig. 1 mit Ue bezeichnete Spannung wird in der in Fig. 2 eingezeichneten Weise an dem gefilterten Ausgang des Brückengleichrichters abgegriffen, könnte aber auch direkt an dem Ausgang, also vor dem Filter abgegriffen werden. Dies ist im Einzelfall abzuwägen, je nachdem ob die Filterung der Erfassung dienlich ist oder nicht.

In der beschriebenen Weise lässt sich der Schalttransistor S20 des SEPIC-Wandlers innerhalb weniger Mikrosekunden zuverlässig abschalten. Damit wird insbesondere verhindert, dass transiente Überspannungen durch eine Sättigung der Speicherdrossel L20 des SEPIC-Wandlers zu hohen Strömen führen, die bei einem Einschalten des Schalttransistors S20 in dieser Phase dem Schalttransistor S20 gefährlich werden können. Insbesondere kann es bei bestimmten Wandlertypen, insbesondere auch beim SEPIC-Wandler, in Folge einer LC-Resonanz im Wandler, aber auch im Netzfilter, zu Spannungsüberschwingern nach transienten Störungen kommen, die das beschriebene Problem verschärfen.

Die Schutzfunktion der Erfindung kann sich dabei aber auch auf Spannungen beziehen. Speziell beim SEPIC-Wandler addieren sich während der Wandlertaktung die Eingangs- und die Ausgangsspannung, liegt jedoch ohne Taktung an dem Schalttransistor nur noch die Eingangsspannung an. Damit kann der Schalttransistor hier auch spannungsmäßig gefährdet sein und wird durch ein Abschalten geschützt.

Damit bietet die Erfindung insgesamt eine einfache, günstige und effektive Möglichkeit zum Schutz des Wandlers und damit des gesamten Vorschaltgeräts vor transienten Störungen. Sie lässt sich übrigens ohne weiteres mit anderen Schutzmaßnahme kombinieren, etwa solchen, die auf die Spannungswerte an sich (also die Amplitude) ansprechen.

## Patentansprüche

1. Elektronisches Vorschaltgerät mit
einem von einer Leistungsversorgung gespeisten Wandler (L20, L21, C10, C30, S20, D20) mit einem Schalttransistor (S20) und
einer Schaltung (C1, C2, R1, R2, D1 - 3, T1) zum Erfassen der Zeitableitung der Spannung der Leistungsversorgung, welche Schaltung dazu ausgelegt ist, den Schalttransistor (S20) des Wandlers (L20, L21, C20, C30, S20, D20) ansprechend auf die erfasste Zeitableitung durch einen Schaltvorgang vor Überlastung zu schützen, **dadurch gekennzeichnet, dass** die Schaltung folgende Merkmale aufweist:
- einen Ausgangstransistor (T1), der ansprechend auf die Erfassung der Zeitableitung der Spannung ein Ausgangssignal erzeugen kann, das zum Abschalten des Schalttransistors (S20) führt,
- einen Gleichspannungs-Trennkondensator (C1), über den die Zeitableitung erfasst wird,
- eine kapazitive Teilerschaltung (C1, C2), welche den Gleichspannungs-Trennkondensator (L1) enthält,
- eine ohmsche Spannungsteilerschaltung (R1, R2) zur Arbeitspunkteinstellung,
- ein Zeitglied (R1, C1) zum Festlegen einer Zeitdauer des Ausschaltens des Schalttransistors (S20), wobei das Zeitglied (R1, C1) einen Kondensator (C1) aus der kapazitiven Teilerschaltung (C1, C2) und einen ohmschen Widerstand (R1) aus der Spannungsteilerschaltung (R1, R2) enthält,
- eine Zenerdiode (D3) zur Festlegung einer Ansprechschwelle bei der Erfassung der Zeitableitung der Spannung.

2. Vorschaltgerät nach Anspruch 1, bei dem der Wandler (L20, L21, C20, C30, S20, D20) eine Leistungsfaktorkorrekturschaltung ist und eine Speicherdrossel (L20) enthält und die Erfassungsschaltung (C1, C2, R1, R2, D1 - 3, T1) dazu ausgelegt ist, durch das Abschalten eine Überlastung des Schalttransistors (S20) durch einen Sättigungsstrom aus der Speicherdrossel L20 zu verhindern.

3. Vorschaltgerät nach Anspruch 1 oder 2, bei dem der Wandler (L20, L21, C20, C30, S20, D20) ein Abwärtswandler ist.

4. Vorschaltgerät nach Anspruch 3, bei dem der Wandler (L20, L21, C20, C30, S20, D20) ein SEPIC-Wandler ist.

5. Verfahren zum Betreiben einer Lampe mit einem elektronischen Vorschaltgerät nach einem der vorstehenden Ansprüche, bei dem die Erfassungsschaltung (C1, C2, R1, R2, D1 - 3, T1) die Zeitableitung der Spannung der Leistungsversorgung erfasst und den Schalttransistor (S20) ansprechend auf die erfasste Zeitableitung abschaltet.

## Claims

1. Electronic ballast having
a converter (L20, L21, C10, C30, S20, D20), which is fed from a power supply and has a switching transistor (S20), and
a circuit (C1, C2, R1, R2, D1 - 3, T1) for detecting the time derivative of the voltage of the power supply, which circuit is designed to protect the switching transistor (S20) of the converter (L20, L21, C20, C30, S20, D20) from being overloaded in response to the detected time derivative by means of a switching operation, **characterized in that** the circuit has the following features:
- an output transistor (T1), which can produce, in response to the detection of the time derivative of the voltage, an output signal which results in the switching transistor (S20) being disconnected,
- a DC voltage isolating capacitor (C1), by means of which the time derivative is detected,
- a capacitive divider circuit (C1, C2), which contains the DC voltage isolating capacitor (L1),
- a resistive Voltage divider circuit (R1, R2) for the purpose of setting the operating point,
- a timing element (R1, C1) for determining a time period for which the switching transistor (S20) is disconnected, with the timing element (R1, C1) containing a capacitor (C1) from the capacitive divider circuit (C1, C2) and a resistor (R1) from the voltage divider circuit (R1, R2),
- a Zener diode (D3) for determining a response threshold when detecting the time derivative of the voltage.

2. Ballast according to Claim 1, in which the converter (L20, L21, C20, C30, S20, D20) is a power factor correction circuit and contains a storage inductor (L20), and the detection circuit (C1, C2, R1, R2, D1 - 3, T1) is designed to prevent the switching transistor (S20) from being overloaded by a saturation current from the storage inductor (L20) by being disconnected.

3. Ballast according to Claim 1 or 2, in which the converter (L20, L21, C20, C30, S20, D20) is a step-down converter.

4. Ballast according to Claim 3, in which the converter (L20, L21, C20, C30, S20, D20) is a SEPIC converter.

5. Method for operating a lamp having an electronic ballast according to one of the preceding claims, in which the detection circuit (C1, C2, R1, R2, D1 - 3, T1) detects the time derivative of the voltage of the power supply and disconnects the switching transistor (S20) in response to the detected time derivative.

## Revendications

1. Ballast électronique avec :
- un convertisseur (L20, L21, C10, C30, S20, D20) alimenté par une alimentation en puissance, avec un transistor de commutation (S20), et
- un circuit (C1, C2, R1, R2, D1-3, T1) pour détecter la dérivation temporelle de la tension de l'alimentation en puissance, lequel circuit est conçu pour, en réaction à la dérivation temporelle détectée, protéger le transistor de commutation (S20) du convertisseur (L20, L21, C20, C30, S20, D20) contre une surcharge par une opération de commutation, **caractérisé en ce que** le circuit présente les caractéristiques suivantes :
- un transistor de sortie (T1) qui, en réaction à la détection de la dérivation temporelle de la tension, peut générer un signal de sortie qui entraîne la coupure du transistor de commutation (S20) ;
- un condensateur de séparation de tension continue (C1) via lequel la dérivation temporelle est détectée ;
- un circuit diviseur capacitif (C1, C2) qui contient le condensateur de séparation de tension continue (L1) ;
- un circuit ohmique diviseur de tension (R1, R2) pour le réglage du point de travail ;
- un organe de temporisation (R1, C1) pour fixer une durée temporelle de la coupure du transistor de commutation (S20), l'organe de temporisation (R1, C1) contenant un condensateur (C1) du circuit diviseur capacitif (C1, C2) et une résistance ohmique (R1) du circuit diviseur de tension (R1, R2) ;
- une diode Zener (D3) pour fixer un seuil de réaction lors de la détection de la dérivation temporelle de la tension.

2. Ballast selon la revendication 1, dans lequel le convertisseur (L20, L21, C20, C30, S20, D20) est un circuit de correction du facteur de puissance et contient une bobine accumulatrice (L20) et le circuit de détection (C1, C2, R1, R2, D1-3, T1) est conçu pour empêcher, par coupure, une surcharge du transistor de commutation (S20) due à un courant de saturation de la bobine accumulatrice L20.

3. Ballast selon la revendication 1 ou 2, dans lequel le convertisseur (L20, L21, C20, C30, S20, D20) est un convertisseur abaisseur.

4. Ballast selon la revendication 3, dans lequel le convertisseur (L20, L21, C20, C30, S20, D20) est un convertisseur SEPIC.

5. Procédé pour faire fonctionner une lampe avec un ballast électronique selon l'une des revendications précédentes, dans lequel le circuit de détection (C1, C2, R1, R2, D1-3, T1) détecte la dérivation temporelle de la tension de l'alimentation en puissance et coupe le transistor de commutation (S20) en réaction à la dérivation temporelle détectée.
